(19) Europäisches Patentamt / European Patent Office / Office européen des brevets

(11) **EP 3 440 835 B1**

(12) **FASCICULE DE BREVET EUROPEEN**

(45) Date de publication et mention
de la délivrance du brevet:
**29.03.2023 Bulletin 2023/13**

(21) Numéro de dépôt: **17715739.3**

(22) Date de dépôt: **05.04.2017**

(51) Classification Internationale des Brevets (IPC):
***H04N 9/31*** *(2006.01)*     ***G02B 27/01*** *(2006.01)*
***G01C 21/36*** *(2006.01)*

(52) Classification Coopérative des Brevets (CPC):
**H04N 9/3185; G01C 21/365; G02B 27/01;**
**H04N 9/3141;** G02B 2027/014

(86) Numéro de dépôt international:
**PCT/EP2017/058167**

(87) Numéro de publication internationale:
**WO 2017/174686 (12.10.2017 Gazette 2017/41)**

(54) **SYSTÈME D'AFFICHAGE TÊTE-HAUTE**

BLICKFELDANZEIGESYSTEM

HEAD-UP DISPLAY SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.04.2016 FR 1600579**

(43) Date de publication de la demande:
**13.02.2019 Bulletin 2019/07**

(73) Titulaire: **Valeo Comfort and Driving Assistance
94046 Créteil Cedex (FR)**

(72) Inventeur: **LESSORT, Cedric
94046 Créteil CEDEX (FR)**

(74) Mandataire: **Delplanque, Arnaud
Valeo Comfort and Driving Assistance
6 rue Daniel Costantini
94000 Créteil (FR)**

(56) Documents cités:
JP-A- 2015 087 619    US-A1- 2009 005 961
US-A1- 2009 278 765    US-A1- 2011 267 700
US-A1- 2015 170 343

**Description**

DOMAINE TECHNIQUE AUQUEL SE RAPPORTE L'INVENTION

La présente invention concerne les techniques d'affichages tête haute, par exemple utilisées dans les véhicules automobiles.

Elle concerne plus particulièrement un système d'affichage tête-haute.

L'invention s'applique particulièrement avantageusement dans le cas où la direction de projection du faisceau lumineux est réglable et où l'on souhaite limiter la consommation de mémoire.

ARRIÈRE-PLAN TECHNOLOGIQUE

On connaît des systèmes d'affichage tête-haute comprenant un module de traitement conçu pour déterminer des données modifiées représentant une image déformée en fonction de données initiales représentant une image d'origine et de données de déformation définissant une déformation d'image, un dispositif de génération d'un faisceau lumineux représentant l'image déformée et un dispositif de projection conçu pour projeter le faisceau lumineux selon une direction réglable à destination d'une lame semi-transparente.

Il est prévu dans ce cas d'utiliser un ensemble de données de déformation distinct pour chaque direction de projection potentiellement réalisée par le dispositif de projection, ce qui entraîne une importante consommation de mémoire.

JP 2015 087619 A divulgue un système d'affichage tête-haute utilisant une table de déformation incluant un ensemble de données de déformation distinct pour chaque direction parmi plusieurs directions de projection potentiellement réalisée par un dispositif de projection.

OBJET DE L'INVENTION

Dans ce contexte, la présente invention propose un système d'affichage tête haute tel que défini dans le jeu de revendications joint.

DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente un système d'affichage tête haute conforme à l'invention ;
- la figure 2 représente les éléments principaux d'un processeur du système de la figure 1 ; et
- la figure 3 représente schématiquement la déformation créée par la table de déformation T.

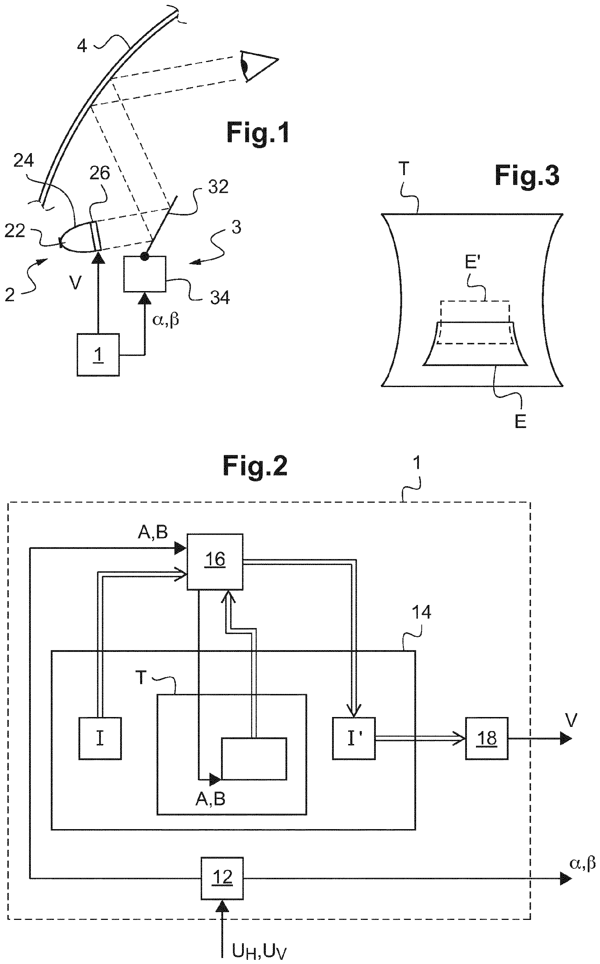

La figure 1 représente schématiquement les éléments principaux d'un système d'affichage tête haute pour véhicule (ici pour véhicule automobile).

Ce système d'affichage tête haute comprend un processeur 1, un dispositif de génération 2 d'un faisceau lumineux, un dispositif de projection 3 du faisceau lumineux dans une direction variable et une lame semi-transparente 4.

La lame semi-transparente 4 est par exemple le pare-brise du véhicule. En variante, il pourrait s'agir d'un combineur (dédié), généralement placé entre le pare-brise du véhicule et le conducteur du véhicule.

Le dispositif de génération 2 est conçu pour générer le faisceau lumineux en fonction d'un signal vidéo V produit par le processeur 1.

Le dispositif de génération 2 comprend ici une source de lumière 22, un réflecteur 24 et un écran 26 auquel est appliqué le signal vidéo V. L'écran 26 est par exemple un écran à cristaux liquides (ou LCD) à transistors en couche mince (ou TFT).

La lumière émise par la source de lumière 22 et réfléchie par le réflecteur 24 est transmise à travers l'écran 26 de manière à former le faisceau lumineux susmentionné. La transmittance de chaque pixel de l'écran 26 est réglée en fonction du signal vidéo V (et ce éventuellement pour les différentes couleurs prises en compte dans le signal vidéo V) de sorte que le faisceau lumineux transmis correspond à l'image représentée par le signal vidéo V.

En variante, le dispositif de génération 2 pourrait comprendre un diffuseur dont la face arrière est balayée par un faisceau lumineux d'intensité (et de couleur) variable, conformément au signal vidéo V, de sorte que la face avant du diffuseur émette un faisceau lumineux correspondant là encore à l'image représentée par le signal vidéo V.

Le dispositif de projection 3 est agencé de manière à transmettre le faisceau lumineux généré par le dispositif de génération 2 en direction de la lame semi-transparente 4, où le faisceau lumineux est en partie réfléchi en direction du conducteur du véhicule de manière à superposer l'image formée par ce faisceau lumineux à l'environnement extérieur du véhicule, également vu par le conducteur à travers la lame semi-transparente 4.

Comme déjà indiqué, le dispositif de projection 3 est conçu de manière à pouvoir faire varier, par exemple sur commande du conducteur, la direction de transmission du faisceau lumineux par le dispositif de projection 3. Ceci permet de faire varier la région de la lame semi-transparente 4 qui réfléchit le faisceau lumineux en direction du conducteur, afin par exemple d'adapter au mieux le système à la taille du conducteur.

Le dispositif de projection 3 comprend ici un miroir de renvoi 32 agencé de manière à réfléchir, en direction de la lame semi-réfléchissante 4, le faisceau lumineux généré par le dispositif de génération 2, et un mécanisme 34 d'inclinaison du miroir de renvoi 32 en fonction de consignes angulaires $\alpha$, $\beta$ reçues du processeur 1.

On peut prévoir par exemple en effet que le mécanisme d'inclinaison 34 permette de faire varier l'inclinaison du miroir de renvoi 32 autour de deux axes distincts : par exemple, la consigne angulaire a correspond à une inclinaison du miroir 32 autour d'un axe quasi-vertical et la consigne angulaire $\beta$ correspond à une inclinaison autour d'un axe horizontal. Ainsi, un réglage de la consigne a entraîne un déplacement horizontal de l'image projetée par le dispositif de projection 3, tandis qu'un réglage de la consigne $\beta$ entraîne un déplacement vertical de l'image projetée.

En variante, le mécanisme d'inclinaison 34 pourrait ne faire varier l'inclinaison du miroir de renvoi 32 que selon une direction, par exemple afin de régler seulement verticalement la position de l'image projetée (au moyen de la consigne $\beta$). La description qui suit est facilement transposable à ce cas en prenant systématiquement $\alpha=0$.

La figure 2 représente les éléments du processeur 1 utiles à la compréhension de l'invention.

Le processeur 1 est ici réalisé sous forme d'un microcontrôleur.

Le processeur 1 comprend un module de commande 12 (ici un microprocesseur), une mémoire 14 (ici une mémoire vive), un module de traitement graphique 16 (ici un processeur graphique ou "*graphies engine*" selon l'appellation anglo-saxonne) et un contrôleur graphique 18.

La mémoire 14 mémorise notamment des données (dites données initiales) représentatives d'une image d'origine I et une table de déformation T (ou table de "*warping*" selon l'appellation anglo-saxonne).

L'image d'origine I est une matrice de pixels ayant une résolution horizontale h et une résolution verticale v. L'image d'origine I est donc définie par un nombre de pixels égal à au produit h x v de la résolution horizontale par la résolution verticale v.

L'image d'origine I est l'image que l'on souhaite présenter au conducteur. Cette image d'origine I contient par exemple des symboles représentant des paramètres de fonctionnement du véhicule (tels que la vitesse instantanée du véhicule ou le régime-moteur du véhicule) et/ou des indications données par un système de navigation.

L'image d'origine I est par exemple générée par un module de gestion de l'affichage (non représentée). Un tel module de gestion de l'affichage peut être intégré au processeur 1 (auquel le module de gestion de l'affichage peut écrire dans la mémoire 14 les données représentatives de l'image d'origine I). En variante, le module de gestion de l'affichage peut être mis en oeuvre par une autre unité électronique (qui transmet alors par exemple les données représentatives de l'image d'origine I au processeur 1 via un réseau informatique embarqué en vue de la mémorisation de ces données dans la mémoire 14).

La table de déformation T définit la déformation à appliquer à l'image d'origine I pour une pluralité de directions de transmission du faisceau lumineux par le dispositif de projection 3.

Pour ce faire, la table de déformation T définit une association entre chaque pixel de l'image d'origine I et un pixel (associé) d'une image (ici de même résolution horizontale h et de même résolution verticale v) obtenue par la déformation, ou image déformée I', ce pour une pluralité de directions de transmission du faisceau lumineux par le dispositif de projection 3.

L'image déformée I' est donc ici définie par un nombre de pixels identique au nombre de pixels définissant l'image d'origine I, nombre égal comme indiqué ci-dessus au produit h x v de la résolution horizontale h par la résolution verticale v.

On prévoit ici que, pour une direction de transmission donnée du faisceau lumineux par le dispositif de projection 3, la table de déformation T contienne, pour chaque pixel de coordonnées (x', y') dans l'image déformée, un enregistrement situé à un emplacement (A+x', B+y') dans la table de déformation T et définissant les coordonnées (x, y) du pixel associé dans l'image d'origine I (où les variables A et B dépendent de la direction de transmission précitée, comme expliqué plus bas).

Du fait que la table de déformation T contient des données (dites données de déformation, ici contenues dans les enregistrements précités) relatives à une pluralité de directions de projection possibles du faisceau lumineux, le nombre d'enregistrements mémorisées dans la table de déformation T est strictement supérieur au nombre de pixels des images d'origine I et déformée I'.

Le module de commande 12 reçoit des instructions $U_H$, $U_V$ indicatives de la position souhaitée par l'utilisateur pour l'affichage de l'image générée par le système d'affichage tête haute. Cette position est par exemple réglée par l'utilisateur par interaction avec une interface utilisateur, qui transmet les instructions $U_H$, $U_V$ au module de commande 12. On prévoit ici que l'instruction $U_H$ corresponde au réglage horizontal souhaité par l'utilisateur pour l'affichage et que l'instruction $U_V$ corresponde au réglage vertical souhaité par l'utilisateur pour l'affichage.

Le module de commande 12 détermine les consignes angulaires $\alpha$, $\beta$ associées respectivement aux instructions $U_H$, $U_V$ (par exemple, pour chaque consigne $\alpha$, $\beta$, par lecture dans une table de correspondance) et transmet ces consignes angulaires $\alpha$, $\beta$ au mécanisme d'inclinaison 34 comme déjà indiqué. (Dans la variante déjà mentionnée où seul un réglage vertical est possible, seule l'instruction $U_V$ est utilisée et le module de commande 12 détermine alors seulement la consigne angulaire $\beta$.)

Le module de commande 12 détermine par ailleurs quelles données de la table de déformation T définissent la déformation $D(\alpha, \beta)$ à appliquer lorsque le dispositif de projection 3 est configuré par application des consignes angulaires α, β.

On prévoit ici que les données de déformation à utiliser dans la table de déformation T soient définies par un emplacement (A, B) au sein de cette table de déformation T.

Le module de commande 12 détermine dans ce cas cet emplacement (A, B) en fonction des consignes angulaires α, β ; ici précisément l'abscisse A de l'emplacement (A, B) est déterminé en fonction de la consigne angulaire α et l'ordonnée B de l'emplacement (A, B) est déterminé en fonction de la consigne angulaire β.

Dans la variante mentionné ci-dessus où le réglage de la position de l'image projetée s'effectue dans la direction verticale seulement (α=0), on prendra toujours A=0.

Le module de commande 12 transmet alors des informations indicatives des données à utiliser (ici les coordonnées (A, B) de l'emplacement définissant ces données) au module de traitement graphique 16.

On remarque que, dans l'exemple décrit ici, le module de commande 12 est intégré au processeur 1 (ici un microcontrôleur) comprenant le module de traitement graphique 16. En variante, le module de commande 12 et le module de traitement graphique 16 pourraient être mis en oeuvre dans deux circuits électroniques distincts.

Le module de traitement graphique 16 peut ainsi appliquer à l'image I la déformation D(α, β) définie par les données de la table de déformation T désignées par le module de commande 12 (ici par l'emplacement (A,B) reçu du module de commande 12).

Par exemple, si les données initiales définissant l'image I comprennent une valeur de luminance L(x, y) pour chaque pixel de coordonnées (x, y), chaque pixel de coordonnées (x', y') dans l'image déformée I' aura la valeur de luminance suivante : L'(x',y')=L(T(A+x', B+y')), où T(A+x', B+y') représente les coordonnées dans l'image I mémorisées dans la table de déformation T à l'emplacement (A+x', B+y').

On ne mentionne ici par mesure de simplification de l'exposé que la luminance définissant l'image d'origine I ou l'image déformée I'. En pratique, les images I, I' peuvent en outre être définies par des valeurs de chrominance, ou, en variante, par des valeurs de luminance associées respectivement à une pluralité de couleurs (typiquement rouge, vert, bleu).

Les données modifiées (ici les valeurs de luminance L') définissant l'image déformée I' sont mémorisées par le module de traitement graphique 16 au sein de la mémoire 14.

Le contrôleur graphique 18 peut ainsi générer un signal vidéo V représentatif de l'image déformée I' (mémorisée dans la mémoire 14 comme indiqué ci-dessus).

Ainsi, le dispositif de génération 2 génère un faisceau lumineux correspondant à l'image déformée I'.

Ce faisceau lumineux correspondant à l'image déformée I' est transmis (ici par réflexion sur le miroir de renvoi 32) dans la direction prévue par utilisation des consignes angulaires α, β et est réfléchi sur la lame semi-transparente 4 dans une région correspondante.

La table de déformation T est conçue de telle sorte que la déformation D(α, β) appliquée à l'image I (comme indiqué plus haut) contrebalance la déformation résultant de la réflexion sur une surface non-plane dans la région précitée de la lame semi-transparente 4 (ainsi qu'éventuellement une déformation créée au niveau du miroir de renvoi 32).

La figure 3 représente schématiquement la déformation créée par la table de déformation T, qui couvre l'ensemble des positions envisagées pour l'affichage de l'image.

En effet, du fait que la déformation à appliquer dépend du lieu de réflexion du faisceau lumineux sur la lame semi-transparente 4, les données de la table de déformation T à utiliser dépendent de la région où est réfléchie l'image à afficher sur la lame semi-transparente 4.

Ainsi, si une région donnée de la lame semi-transparente 4 est utilisée pour deux positions distinctes d'affichage de l'image (correspondant à deux directions de transmission distinctes du faisceau lumineux par le dispositif de projection 3), les données de la table de déformation T relatives à cette région seront utilisées pour la détermination de l'image modifiée I' dans chacune des deux positions (même si ces données seront appliquées à des pixels différents pour une position et pour l'autre position).

Par exemple, si un ensemble de données E (ici une sous-table d'emplacements de dimensions h x v, repérée par un emplacement $(A_0, B_0)$) définit la déformation $D(\alpha_0, \beta_0)$ à appliquer à l'image d'origine I lorsque les consignes angulaires $\alpha_0, \beta_0$ sont appliquées au dispositif de projection 3 et si un ensemble de données E' (ici une sous-table d'emplacements de dimensions h x v, repérée par un emplacement $(A_1, B_1)$) définit la déformation $D(\alpha_1, \beta_1)$ à appliquer à l'image d'origine I lorsque les consignes angulaires $\alpha_1, \beta_1$ sont appliquées au dispositif de projection 3, il existe des données communes à l'ensemble de données E et à l'ensemble de données E' lorsqu'une région de la lame semi-transparente est utilisée pour réfléchir l'image affichée dans les deux configurations précitées (ce qui se produit ici lorsque $| A_0 - A_1 | < h$ et $| B_0 - B_1 | < v$).

En reprenant la notation utilisée ci-dessous, un enregistrement situé à l'emplacement (a, b) de la table de déformation T pourra ainsi être utilisé :

- lorsque les consignes angulaires $\alpha_0, \beta_0$ sont appliquées au dispositif de projection, pour déterminer la luminance L'(x',y') du pixel de coordonnées (x',y') de l'image modifiée I' tel que $a = A_0 + x'$ et $b = B_0 + y'$ (on rappelle en effet que l'on a dans ce cas : $L'(x', y')=L(T(A_0+x', B_0+y')))$ ;
- lorsque les consignes angulaires $\alpha_1, \beta_1$ sont appliquées au dispositif de projection, pour déterminer la luminance L'(x'',y'') du pixel de coordonnées (x'',y'') de l'image modifiée I' tel que a = $A_1$ + x'' et b = $B_1$ + y'' (puisqu'on a alors :

$$L'(x'', y'')=L(T(A_1+x'', B_1+y'')))).$$

Autrement dit, il n'est pas nécessaire d'utiliser une table de déformation distincte pour chaque direction possible de projection. La table de déformation T comprend ainsi un nombre d'enregistrements strictement inférieur au produit du nombre de pixels (ici hxv) de l'image déformée I' par le nombre de directions de projection du faisceau lumineux prévues dans le dispositif de projection 3.

**Revendications**

1. Système d'affichage tête-haute comprenant :

- un module de traitement (1) conçu pour déterminer des données modifiées représentant une image déformée (I') en fonction de données initiales représentant une image d'origine (I) et de données de déformation définissant une déformation d'image D($\alpha$, $\beta$) à appliquer à l'image d'origine ;
- un dispositif de génération (2) d'un faisceau lumineux représentant ladite image déformée (I') ;
- un dispositif de projection (3) conçu pour projeter le faisceau lumineux selon une direction réglable à destination d'une lame semi-transparente (4), ladite lame semi-transparente étant conçue pour afficher l'image déformée en réfléchissant le faisceau lumineux en direction de l'utilisateur, ladite direction réglable permettant de faire varier la région de la lame semi-transparente (4) qui réfléchit l'image déformée, et lesdites données de déformation définissant une déformation d'image étant conçues pour contrebalancer la déformation résultant de la réflexion sur une surface non-plane de la lame semi-transparente, le module de traitement (1) étant conçu pour sélectionner lesdites données de déformation définissant une déformation d'image dans une table de déformation (T) en fonction de ladite direction réglable, la table de déformation (T) comprenant un premier ensemble de données (E) de déformation définissant la déformation d'image D($\alpha$0, $\beta$0) à appliquer à l'image d'origine pour déterminer les données modifiées représentant l'image déformée (I') lorsque le dispositif de projection (3) projette le faisceau lumineux dans une première direction définissant une première région de la lame semi-transparente où est réfléchie l'image déformée et un second ensemble de données (E'), différent du premier ensemble définissant la déformation d'image D($\alpha$1, $\beta$1) à appliquer à l'image d'origine (I) pour déterminer les données modifiées représentant l'image déformée (I') lorsque le dispositif de projection (3) projette le faisceau lumineux dans une seconde direction distincte de la première direction, définissant une seconde région de la lame semi-transparente où est réfléchie l'image déformée, **caractérisé en ce que** première région et la seconde région de la lame semi-transparente ont une région commune, et **en ce que** les données de déformation de la table de déformation relatives à la région commune sont communes à l'ensemble des données E et à l'ensemble des données E', et sont utilisées pour déterminer les données modifiées représentant l'image déformée pour chacune de la première direction et la seconde direction.

2. Système d'affichage tête-haute selon la revendication 1, dans lequel les données de la table de déformation (T) définissent, pour chacune d'une pluralité de directions de projection, une association entre chaque pixel de l'image d'origine (I) et un pixel associé de l'image déformée (I').

3. Système d'affichage tête-haute selon l'une des revendications 1 à 2, dans lequel pour une direction de projection donnée, la table de déformation (T) contient, pour chaque pixel de l'image déformée, un enregistrement définissant les coordonnées du pixel associé dans l'image d'origine (I).

4. Système d'affichage tête-haute selon la revendication 3, dans lequel la table de déformation (T) comprend un nombre d'enregistrements strictement supérieur au nombre de pixels de l'image déformée (I') et strictement inférieur au produit du nombre de pixels de l'image déformée (I') par le nombre de directions de projection du faisceau lumineux prévues dans le dispositif de projection (3).

5. Système d'affichage tête-haute selon l'une des revendications 1 à 4, dans lequel le dispositif de projection (3) comprend un miroir de renvoi (32) et un mécanisme d'inclinaison (34) du miroir de renvoi conçu pour régler ladite direction de projection.

6. Système d'affichage tête-haute selon l'une des revendications 1 à 5, dans lequel le processeur (1) est conçu pour recevoir des instructions ($U_H$, $U_V$) et pour déterminer, en fonction des instructions reçues ($U_H$, $U_V$), des consignes angulaires ($\alpha$, $\beta$) destinées au dispositif de projection (3) et des données (A, B) désignant les données de déformation sélectionnées.

**7.** Système d'affichage selon l'une des revendications 1 à 6, dans lequel la lame semi-transparente est un combineur.

**8.** Système d'affichage selon l'une des revendications 1 à 6, dans lequel la lame semi-transparente (4) est un pare-brise.

**Patentansprüche**

**1.** Head-up-Anzeigesystem, das enthält:

- ein Verarbeitungsmodul (1), das konzipiert ist, um ein verformtes Bild (I') darstellende, veränderte Daten abhängig von ein Ursprungsbild (I) darstellenden Ausgangsdaten und von eine an das Ursprungsbild anzuwendende Bildverformung D($\alpha$,$\beta$) definierenden Verformungsdaten zu bestimmen;
- eine Erzeugungsvorrichtung (2) eines das verformte Bild (I') darstellenden Lichtstrahls;
- eine Projektionsvorrichtung (3), die konzipiert ist, den Lichtstrahl gemäß einer einstellbaren Richtung zu einer halbdurchlässigen Platte (4) zu projizieren, wobei die halbdurchlässige Platte konzipiert ist, um das verformte Bild anzuzeigen, indem sie den Lichtstrahl in Richtung des Benutzers reflektiert, wobei die einstellbare Richtung es ermöglicht, den das verformte Bild reflektierenden Bereich der halbdurchlässigen Platte (4) zu variieren, und die eine Bildverformung definierenden Verformungsdaten konzipiert sind, um die Verformung auszugleichen, die aus der Reflexion auf einer nicht ebenen Fläche der halbdurchlässigen Platte resultiert, wobei das Verarbeitungsmodul (1) konzipiert ist, um abhängig von der einstellbaren Richtung in einer Verformungstabelle (T) die eine Bildverformung definierenden Verformungsdaten auszuwählen, wobei die Verformungstabelle (T) eine erste Einheit von Verformungsdaten (E), die die an das Ursprungsbild anzuwendende Bildverformung D($\alpha$0, $\beta$0) definieren, um die das verformte Bild (I') darstellenden veränderten Daten zu bestimmen, wenn die Projektionsvorrichtung (3) den Lichtstrahl in eine erste Richtung projiziert, die einen ersten Bereich der halbdurchlässigen Platte definiert, in dem das verformte Bild reflektiert wird, und eine zweite Einheit von Daten (E') anders als die erste Einheit enthält, die die an das Ursprungsbild (I) anzuwendende Bildverformung D($\alpha$1, $\beta$1) definieren, um die das verformte Bild (I') darstellenden veränderten Daten zu bestimmen, wenn die Projektionsvorrichtung (3) den Lichtstrahl in eine zweite Richtung anders als die erste Richtung projiziert, die einen zweiten Bereich der halbdurchlässigen Platte definiert, in dem das verformte Bild reflektiert wird,

**dadurch gekennzeichnet, dass** der erste Bereich und der zweite Bereich der halbdurchlässigen Platte einen gemeinsamen Bereich haben,

und dass die Verformungsdaten der Verformungstabelle bezüglich des gemeinsamen Bereichs der Einheit der Daten E und der Einheit der Daten E' gemeinsam sind und verwendet werden, um für jede der ersten Richtung und der zweiten Richtung die das verformte Bild darstellenden veränderten Daten zu bestimmen.

**2.** Head-up-Anzeigesystem nach Anspruch 1, wobei die Daten der Verformungstabelle (T) für jede einer Vielzahl von Projektionsrichtungen eine Zuordnung zwischen jedem Pixel des Ursprungsbilds (I) und einem zugeordneten Pixel des verformten Bilds (I') definieren.

**3.** Head-up-Anzeigesystem nach einem der Ansprüche 1 bis 2, wobei für eine gegebene Projektionsrichtung die Verformungstabelle (T) für jedes Pixel des verformten Bilds eine Eintragung enthält, die die Koordinaten des zugeordneten Pixels im Ursprungsbild (I) definiert.

**4.** Head-up-Anzeigesystem nach Anspruch 3, wobei die Verformungstabelle (T) eine Anzahl von Eintragungen strikt größer als die Anzahl von Pixeln des verformten Bilds (I') und strikt kleiner als das Produkt aus der Anzahl von Pixeln des verformten Bilds (I') und der Anzahl von Projektionsrichtungen des Lichtstrahls enthält, die in der Projektionsvorrichtung (3) vorgesehen sind.

**5.** Head-up-Anzeigesystem nach einem der Ansprüche 1 bis 4, wobei die Projektionsvorrichtung (3) einen Umlenkspiegel (32) und einen Neigungsmechanismus (34) des Umlenkspiegels enthält, der konzipiert ist, um die Projektionsrichtung einzustellen.

**6.** Head-up-Anzeigesystem nach einem der Ansprüche 1 bis 5, wobei der Prozessor (1) konzipiert ist, um Anweisungen ($U_H$, $U_V$) zu empfangen und um abhängig von den empfangenen Anweisungen ($U_H$, $U_V$) Winkelsollwerte ($\alpha$,$\beta$), die für die Projektionsvorrichtung (3) bestimmt sind, und Daten (A, B) zu bestimmen, die die ausgewählten Verformungsdaten bezeichnen.

**7.** Anzeigesystem nach einem der Ansprüche 1 bis 6, wobei die halbdurchlässige Platte ein Combiner ist.

**8.** Anzeigesystem nach einem der Ansprüche 1 bis 6, wobei die halbdurchlässige Platte (4) eine Windschutzscheibe ist.

**Claims**

1. Head-up display system comprising:

    - a processing module (1) designed to determine modified data representing a warped image (I') depending on initial data representing an original image (I) and on warping data defining an image warpage $D(\alpha, \beta)$ to be applied to the original image;
    - a device (2) for generating a light beam representing said warped image (I');
    - a projecting device (3) designed to project the light beam in an adjustable direction onto a semi-transparent plate (4), said semi-transparent plate being designed to display the warped image by reflecting the light beam in the direction of the user, said adjustable direction allowing the region of the semi-transparent plate (4) that reflects the warped image to be made to vary, and said warping data defining an image warpage being designed to counteract the warpage resulting from reflection from a non-planar surface of the semi-transparent plate, the processing module (1) being designed to select said warping data defining an image warpage from a warping table (T) depending on said adjustable direction,

    the warping table (T) comprising

    a first set (E) of warping data defining the image warpage $D(\alpha 0, \beta 0)$ to be applied to the original image to determine the modified data representing the warped image (I') when the projecting device (3) projects the light beam in a first direction defining a first region of the semi-transparent plate from which the warped image is reflected, and

    a second set (E') of data that is different from the first set, defining the image warpage $D(\alpha 1, \beta 1)$ to be applied to the original image (I) to determine the modified data representing the warped image (I') when the projecting device (3) projects the light beam in a second direction distinct from the first direction and defining a second region of the semi-transparent plate from which the warped image is reflected,

    **characterized in that** the first region and second region of the semi-transparent plate have a common region,

    and **in that** the warping data of the warping table that relate to the common region are common to the dataset E and to the dataset E', and are used to determine the modified data representing the warped image for each of the first direction and second direction.

2. Head-up display system according to Claim 1, wherein the data of the warping table (T) define, for each of a plurality of projection directions, an association between each pixel of the original image (I) and an associated pixel of the warped image (I').

3. Head-up display system according to one of Claims 1 to 2, wherein, for a given projection direction, the warping table (T) contains, for each pixel of the warped image, a record defining the coordinates of the associated pixel in the original image (I).

4. Head-up display system according to Claim 3, wherein the warping table (T) comprises a number of records strictly higher than the number of pixels of the warped image (I') and strictly lower than the product of the number of pixels of the warped image (I') multiplied by the number of light-beam projection directions provided for in the projecting device (3).

5. Head-up display system according to one of Claims 1 to 4, wherein the projecting device (3) comprises a folding mirror (32) and a mechanism (34) for inclining the folding mirror, designed to adjust said projection direction.

6. Head-up display system according to one of Claims 1 to 5, wherein the processor (1) is designed to receive instructions $(U_H, U_V)$ and to determine, depending on the received instructions $(U_H, U_V)$, angular setpoints $(\alpha, \beta)$ intended for the projecting device (3) and data (A, B) designating the selected warping data.

7. Display system according to one of Claims 1 to 6, wherein the semi-transparent plate is a combiner.

8. Display system according to one of Claims 1 to 6, wherein the semi-transparent plate (4) is a windshield.

Fig.1

Fig.3

Fig.2

## RÉFÉRENCES CITÉES DANS LA DESCRIPTION

**Documents brevets cités dans la description**

- JP 2015087619 A